# EUROPÄISCHE PATENTSCHRIFT

(11) **EP 3 311 146 B1**
(45) Veröffentlichungstag und Bekanntmachung des Hinweises auf die Patenterteilung: **27.12.2023**
(21) Anmeldenummer: 16725483.8
(22) Anmeldetag: 23.05.2016
(51) Int. Cl.: B67B 3/26, G01N 21/90, G01M 3/36, G01M 3/22, G01B 11/16, G01B 11/24, G01M 3/38

(54) **INSPEKTIONSVERFAHREN UND -VORRICHTUNG ZUR VERSCHLUSSKONTROLLE VON BEHÄLTERN**
INSPECTION METHOD AND INSPECTION DEVICE FOR THE CLOSURE CONTROL OF CONTAINERS
PROCÉDÉ ET DISPOSITIF D'INSPECTION POUR CONTRÔLER LA FERMETURE DE RÉCIPIENTS

(30) Priorität: 19.06.2015 DE 102015211317
(43) Veröffentlichungstag der Anmeldung: 25.04.2018
(73) Patentinhaber: Krones AG, 93073 Neutraubling (DE)
(72) Erfinder: PIANA, Stefan, Neutraubling 93073 (DE)
(74) Vertreter: Grünecker Patent- und Rechtsanwälte PartG mbB
(86) Internationale Anmeldenummer: PCT/EP2016/061535
(87) Internationale Veröffentlichungsnummer: WO 2016/202528

(56) Entgegenhaltungen:
- AT-A4- 510 294
- DE-A1- 19 540 545
- DE-A1-102008 023 047
- DE-A1-102012 209 305
- GB-A- 1 469 240
- GB-A- 2 204 125
- JP-A- H09 169 392
- JP-A- 2015 102 360
- JP-B1- 5 499 289
- US-A- 4 907 443
- US-A- 5 369 713
- US-A1- 2010 259 746
- US-A1- 2012 304 763

## Beschreibung

Die Erfindung betrifft ein Inspektionsverfahren zur Verschlusskontrolle von Behältern mit den Merkmalen des Oberbegriffs von Anspruch 1 und eine Inspektionsvorrichtung mit den Merkmalen des Oberbegriffs von Anspruch 11.

Bei Inspektionsverfahren zur Verschlusskontrolle von Behältern werden üblicherweise die verschlossenen Behälter mit einer Transporteinrichtung transportiert und mit einer Inspektionsvorrichtung hinsichtlich Dichtigkeit und/oder korrekten Sitz von auf den Behältern angebrachten Verschlüssen inspiziert.

Beispielsweise wird bei einem bekannten Verfahren der Kronkorken mittels eines elektromagnetischen Impulses in Schwingung versetzt und aus dem Schwingungsverhalten auf einen falsch aufgesetzten Kronkorken geschlossen. Allerdings ist dieses Verfahren ausschließlich für Metallverschlüsse geeignet.

Ebenso sind Verfahren bekannt, bei denen mittels einer Kamera ein Verschlusslogo von oben oder der Verschluss samt Behälterhals aus einer seitlichen Ansicht aufgenommen wird. Dazu werden auch Spiegelkabinette mit hochauflösenden Kameras eingesetzt, um den verschlossenen Behälter aus mehreren Blickrichtungen gleichzeitig in einem Kamerabild aufzunehmen. Die von der Kamera aufgenommenen Bilder werden anschließend mittels Bildverarbeitung auf einen korrekten Sitz des Verschlusses hin ausgewertet. Um eine zuverlässige Verschlusskontrolle durchzuführen, müssen allerdings eine Vielzahl von Blickrichtungen aufgenommen und ausgewertet werden, was dementsprechend aufwändig ist.

Ebenso ist ein Inspektionsverfahren bekannt, bei dem mittels eines optischen Abstandssensors oder eines magnetischen Näherungstasters die Wölbung des Verschlusses gemessen und daraus auf den Innendruck geschlossen wird. Hier ist insbesondere nachteilig, dass der Enddruck im Behälter erst nach 20-30 Minuten erreicht wird, typischerweise nach dem Pasteurisieren, und erst dann eine zuverlässige Messung durchgeführt werden kann.

Um folglich eine zuverlässige Verschlusskontrolle durchzuführen, müssen in Abhängigkeit von den verschiedenen Behälter- und Verschlussarten unterschiedliche Verfahren eingesetzt werden. Des Weiteren sind bei den bildgebenden Verfahren gegebenenfalls mehrere Kameras und Ansichten notwendig, um eine zuverlässige Verschlusskontrolle zu gewährleisten. Dies ist entsprechend aufwändig hinsichtlich der Kosten, des Bauraums und der Einrichtung.

Die US 4 907 443 A offenbart ein Verfahren und eine Vorrichtung zur Überwachung des Drucks in einem Behälter.

Die AT 510 294 A4 offenbart ein Verfahren und eine Vorrichtung zur Messung des Innendrucks von Flaschen.

Die US 2010/259746 A1 offenbar ein Profilometer.

Die JP 2015 102360 A offenbart eine Inspektionsvorrichtung und -verfahren für verschlossene Behälter.

Die JP 09169392 A offenbart eine Inspektionsvorrichtung zur Kontrolle von Verschlüssen auf Getränkeflaschen anhand von Schattenbildaufnahmen.

Aufgabe der vorliegenden Erfindung ist es daher, ein Inspektionsverfahren und eine Inspektionsvorrichtung zur Verschlusskontrolle von Behältern bereitzustellen, mit denen eine zuverlässige Verschlusskontrolle von verschiedenartigsten Behälter- und Verschlusstypen möglich ist und das hinsichtlich des Einsatzes der Inspektionshardware besonders einfach aufgebaut ist. Zur Lösung dieser Aufgabenstellung stellt die Erfindung ein Inspektionsverfahren zur Verschlusskontrolle von Behältern mit den Merkmalen des Anspruchs 1 bereit.

Vorteilhafte Weiterbildungen der Erfindung sind in den Unteransprüchen genannt.

Dadurch, dass ein optisches 3D-Messverfahren bei dem Inspektionsverfahren eingesetzt wird, wird die Oberfläche des Behälters bzw. des darauf angebrachten Verschlusses räumlich besonders hochauflösend, genau und berührungsfrei erfasst. Durch die hochauflösende Messung von Oberflächendaten des Behälters zusammen mit seinem Verschluss und die daraus generierten 3D-Daten steht der Auswerteeinrichtung eine umfassende Informationsmenge ohne Abhängigkeit von der Kameraperspektive zur Verfügung, wobei die Auswertung der 3D-Daten nach der Erfassung an die verschiedenen Behältertypen bzw. Verschlusstypen angepasst werden kann. Anders ausgedrückt ist bei dem Inspektionsverfahren kein Wechsel des Messverfahrens mehr notwendig, sondern lediglich eine auf den Behälter bzw. den Verschluss angepasste Auswertung, beispielsweise durch eine entsprechende Softwareparametrisierung.

Das Inspektionsverfahren kann in einer Getränkeverarbeitungsanlage durchgeführt werden, beispielsweise in einer Inspektionsvorrichtung. Beispielsweise kann das Inspektionsverfahren in einer Vollflascheninspektionsmaschine eingesetzt werden. Das Inspektionsverfahren kann nach dem Füllen und Verschließen der Behälter durchgeführt werden, beispielsweise im Anschluss an einen Füller und einen Verschließer. Ebenso ist denkbar, dass das Inspektionsverfahren an verschlossenen Behältern durchgeführt wird, die bereits in einem Gebinde gruppiert sind.

Die Behälter können dazu vorgesehen sein, Getränke, Nahrungsmittel, Hygieneartikel, Pasten, chemische und biologische und/oder pharmazeutische Produkte aufzunehmen. Die Behälter können Kunststoffflaschen, Glasflaschen, Dosen und/oder Tuben sein. Bei Kunststoffbehältern kann es sich im Speziellen um PET-, PEN-, HD-PE- oder PP-Behälter bzw. -Flaschen handeln. Ebenso kann es sich um biologisch abbaubare Behälter oder Flaschen handeln, deren Hauptbestandteile aus nachwachsenden Rohstoffen, wie z. B. Zuckerrohr, Weizen oder Mais bestehen. Der Verschluss kann ein Kronkorken, Schraubverschluss, Abreißverschluss oder dergleichen sein.

Das optische 3D-Messverfahren kann dazu ausgebildet sein, eine Stirnseite und/oder wenigstens teilweise einen Rand des Verschlusses zu erfassen und ist, gemäß der Erfindung, dazu ausgebildet, wenigstens teilweise den Behälterhals zu erfassen. Der Behälter zusammen mit seinem Verschluss wird, gemäß der Erfindung, durch das optische 3D-Messverfahren aus einer oder mehreren Blickrichtungen erfasst. Denkbar ist, dass dabei die

3D-Daten aus mehreren Blickrichtungen zusammengematcht werden. Denkbar ist auch, dass der Behälter zur Erfassung von mehreren Blickrichtungen mittels einer Behälteraufnahme gedreht wird. Alternativ kann ein Behälter mit dem optischen 3D-Messverfahren aus mehreren Blickrichtungen gleichzeitig erfasst werden, beispielsweise über mehrere optische 3D-Messsensoren.

Die 3D-Daten können 3D-Punkte, 3D-Linienelemente und/oder 3D-Flächenelemente sein. Die 3D-Punkte können Oberflächenpunkte des Behälters und des Verschlusses in einem dreidimensionalen bzw. räumlichen Koordinatensystem sein. Die 3D-Linienelemente können Geraden, Kurven wie beispielsweise Kreissegmente und/oder Splines sein. Die 3D-Flächenelememente können Dreiecke und/oder Vierecke sein, die vorzugsweise in einem oder mehreren Flächennetzen verbunden sind.

Die Auswerteeinrichtung kann ein Computer, eine Maschinensteuerung oder eine separate Bildverarbeitungshardware sein, die insbesondere eine CPU, einen Speicher und/oder eine Datenschnittstelle umfassen. Die Auswerteeinrichtung kann separat angeordnet oder in einen 3D-Messsensor wenigstens teilweise integriert sein. Die Auswerteeinrichtung kann dazu ausgebildet sein, die 3D-Daten geometrisch auszuwerten, um daraus auf die Dichtigkeit und/oder den korrekten Sitz des Verschlusses zu schließen. Die Auswerteeinrichtung kann über einen Datenbus oder dergleichen mit einer Ausschleuseinrichtung verbunden sein, um Behälter mit einem undichten oder fehlerhaft aufgebrachten Verschluss auszuschleusen, beispielsweise mittels einer steuerbaren Weiche. Die fehlerhaften Behälter können beispielsweise einer Recyclinganlage zugeführt werden, um deren Material zurückzugewinnen.

Bei der Verarbeitung durch die Auswerteeinrichtung werden, gemäß der Erfindung, die 3D-Daten des Verschlusses und die 3D-Daten des Behälters voneinander getrennt. Anders ausgedrückt werden die 3D-Daten jeweils dem Verschluss bzw. dem Behälter zugeordnet. Dadurch ist es möglich, die 3D-Daten des Verschlusses bzw. des Behälters jeweils unterschiedlichen Auswerteverfahren zuzuführen. Beispielsweise können bei der Verarbeitung der 3D-Daten geometrische Korrelationsmerkmale zwischen dem Verschluss und dem Behälter ermittelt werden. Mit geometrischen Korrelationsmerkmalen kann gemeint sein, wie der Verschluss relativ zum Behälter angeordnet ist. Beispielsweise können bei der Verarbeitung der 3D-Daten eine Position, eine Höhe, ein Schiefsitz und/oder eine Exzentrizität des Verschlusses gegenüber dem Behälter ermittelt werden. Mit Position kann hier gemeint sein, wie ein Bezugskoordinatensystem des Verschlusses gegenüber einem Bezugskoordinatensystem des Behälters angeordnet ist. Ebenso kann damit gemeint sein, an welcher Position bzw. mit welcher Orientierung sich der Verschluss in einem Behälterkoordinatensystem befindet. Mit der Höhe des Verschlusses kann hier gemeint sein, an welcher Position sich der Verschluss längs einer Behälterlängsache befindet. Mit Schiefsitz kann z.B. der Verkippungswinkel zwischen der Ebene des Tragrings oder der Mündungsfläche des Behälters zur Auflageebene oder der oberen Begrenzungsebene des näherungsweise zylindrischen Verschlusses gemeint sein. Mit Exzentrizität des Verschlusses kann der Abstand eines Verschlussmittelpunkts zu einer Behälterlängsachse gemeint sein.

Des Weiteren kann bei der Verarbeitung der 3D-Daten eine Wölbung des Verschlusses ermittelt werden. Mit der Wölbung des Verschlusses kann eine Ausbeulung des Verschlusses aufgrund des im Behälter vorherrschenden Innendrucks gemeint sein. Denkbar ist, dass zur Ermittlung der Wölbung eine hinsichtlich ihrer Krümmung parametrisierbare Fläche durch die 3D-Daten der Stirnseite des Verschlusses gefittet wird. Aus der Krümmung der parametrisierbaren Fläche kann dann auf die Wölbung des Verschlusses geschlossen werden.

Bei der Verarbeitung können die 3D-Daten wenigstens teilweise mit einer Referenzgeometrie verglichen werden und daraus insbesondere Verformungsdaten des Verschlusses ermittelt werden. Denkbar ist, dass als Referenzgeometrie CAD-Daten dienen, die von der Konstruktion des Behälters bzw. des Verschlusses stammen. Ebenso ist denkbar, dass die Referenzgeometrie als 3D-Punkte, 3D-Linienelemente und/oder 3D-Flächenelemente im Sinne der zuvor beschriebenen 3D-Daten vorliegt. Beispielsweise kann für die 3D-Daten jeweils der kleinste Abstand zur Referenzgeometrie ermittelt werden, beispielsweise zu einem korrespondierenden 3D-Punkt oder einer korrespondierenden 3D-Fläche der Referenzgeometrie. Die Verformungsdaten des Verschlusses können insbesondere die Wölbung des Verschlusses umfassen. Aus den Verformungsdaten bzw. der Wölbung des Verschlusses kann auf den in dem Behälter vorherrschenden Innendruck und damit auf dessen Dichtigkeit geschlossen werden. Ist beispielsweise die Wölbung des Verschlusses gegenüber einem Referenzwert zu gering, so kann auf einen zu geringen Innendruck und damit auf eine Undichtigkeit geschlossen werden.

Das 3D-Messverfahren kann ein stereoskopisches 3D-Messverfahren umfassen, bei dem der Behälter zusammen mit seinem Verschluss wenigstens teilweise aus zwei Bildperspektiven erfasst wird. Bei dem stereoskopischen 3D-Messverfahren ist also gemeint, dass die Oberflächenpunkte auf dem Behälter bzw. auf dem Verschluss jeweils aus den beiden Bildperspektiven erfasst werden und daraus deren Koordinate in einem Koordinatensystem berechnet wird. Werden beispielsweise bei dem stereoskopischen 3D-Messverfahren zwei Kameras eingesetzt, die aus verschiedenen Richtungen dem Behälter zusammen mit seinem Verschluss wenigstens teilweise erfassen, so wird jeweils derselbe Oberflächenpunkt auf dem Behälter oder auf dem Verschluss in Beiden Kamerabildern identifiziert. Anschließend wird mittels der entsprechenden Pixelkoordinaten in den beiden Kamerabildern und über die Anordnung der beiden Kameras im Raum sowie über Abbildungsparameter der Objektive die Position des Objektpunkts berechnet (trianguliert).

Ebenso ist denkbar, dass bei dem stereoskopischen 3D-Messverfahren der Behälter zusammen mit seinem Verschluss wenigstens teilweise von einer Kamera mit einem stereoskopischen Objektiv erfasst wird, wobei das stereoskopische Objektiv zwei oder mehr Bildperspektiven auf einem einzelnen Bildsensor der Kamera abbildet.

Bei dem stereoskopischen 3D-Messverfahren kann der Behälter zusammen mit seinem Verschluss wenigstens teilweise von einer diffusen Lichtquelle beleuchtet werden. Dadurch kommt es zu einer besonders gleichmäßigen Ausleuchtung des Behälters und des Verschlusses, so dass der Kontrast bei der optischen Erfassung besonders gleichmäßig ist. Beispielsweise können dadurch mit dem optischen 3D-Messverfahren sowohl diffus als auch stark spiegelnd reflektierende Verschlüsse und Behälteroberflächen gut erfasst werden.

Bei dem stereoskopischen 3D-Messverfahren kann der Behälter mit seinem Verschluss wenigstens teilweise von einer strukturierten Lichtquelle zur Korrelation derselben Objektpunkte in den zwei Bildperspektiven beleuchtet werden. Dadurch ist eine besonders einfache Korrelation derselben Objektpunkte in den beiden Bildperspektiven möglich, da diese durch die von der Lichtquelle aufgebrachte Struktur mit besonders geringem Rechenaufwand sicher identifiziert werden können. Darüber hinaus kann damit die Genauigkeit des stereoskopischen 3D-Messverfahrens erhöht werden. Die strukturierte Lichtquelle kann beispielsweise regelmäßig oder stochastisch verteilte Lichtpunkte projizieren. Ebenso ist denkbar, dass die strukturierte Lichtquelle ein regelmäßiges oder unregelmäßiges Muster wie beispielsweise ein Gitter oder Streifen projiziert.

Das 3D-Messverfahren kann alternativ auch ein Lichtschnitt-3D-Messverfahren umfassen, bei dem der Behälter zusammen mit seinem Verschluss wenigstens teilweise aus einer ersten Richtung mittels einer strukturierten Lichtquelle beleuchtet und aus einer dazu schrägen zweiten Richtung mit einer Kamera erfasst wird. Dadurch muss nur eine Kamera eingesetzt werden und die strukturierte Lichtquelle dient als inverse Kamera. Folglich erfolgt die 3D-Messung besonders sicher und mit geringem Geräteaufwand. Die strukturierte Lichtquelle kann derart kodiert sein, dass Lichtebenen der Lichtquelle eindeutig im Kamerabild identifizierbar sind. Beispielsweise kann die strukturierte Lichtquelle mit einem Gray-Code-Verfahren oder dergleichen codiert sein. Denkbar ist weiter, dass die strukturierte Lichtquelle räumlich oder zeitlich kodiert ist, wobei bei der zeitlichen Kodierung nacheinander unterschiedliche Lichtmuster auf den Behälter bzw. den Verschluss projiziert werden. Ebenso ist denkbar, dass bei dem Lichtschnitt-3D-Messverfahren lediglich eine Lichtebene, beispielsweise mittels einer Laser-Linie, projiziert wird und diese von einer Kamera erfasst wird. Dadurch kann die Linie besonders einfach in der Kamera detektiert und Objektpunkte auf der Linie besonders einfach ermittelt werden. Es ist weiter möglich, über eine Relativbewegung des verschlossenen Behälters im Wesentlichen quer zur Lichtlinie des 3D-Messsensors flächige 3D-Daten zu generieren. Denkbar ist, dass der Behälter dazu mittels der Transporteinrichtung transportiert und so gegenüber dem 3D-Messsensor verfahren wird. Ebenso ist denkbar, dass dies über eine dedizierte Verfahreinheit erfolgt.

Vorzugsweise wird bei dem 3D-Messverfahren der Behälter zusammen mit seinem Verschluss wenigstens teilweise mit einer Auflösung von < 0,5 mm, bevorzugt < 0,2 mm oder weiterhin bevorzugt < 0,1 mm dreidimensional erfasst. Mit der Auflösung ist hier beispielsweise der laterale Abstand der 3D-Punkte zueinander gemeint. Die Auflösung kann dem Bildsensorraster der Kamera des 3D-Messsensor entsprechen. Je kleiner die Auflösung ist, also je geringer der Abstand der gewonnenen 3D-Daten ist, desto genauer können lokale Merkmale des Verschlusses bzw. des Behälters erfasst werden. Dadurch ist eine noch zuverlässigere Verschlusskontrolle möglich. Aufgrund der Vielzahl der aufgenommenen Konturpunkte könnten die 3D-Punkte auch mit höherer Auflösung verglichen mit dem Bildsensorraster berechnet werden.

Weiterhin ist denkbar, dass bei dem Inspektionsverfahren der Verschluss und/oder eine Mündung des Behälters wenigstens teilweise von einem perizentrischen Objektiv erfasst werden. Mit perizentrisch kann hier gemeint sein, dass der Strahlengang des Objektivs auf Seiten des Behälters bzw. des Verschlusses nicht divergiert sondern konvergiert. Dadurch ist es möglich, dass das Objektiv den Verschluss, insbesondere dessen Rand, gleichzeitig aus mehreren Richtungen beobachtet. Die Frontlinse des perizentrischen Objektivs kann dabei vorzugsweise größer als der Verschluss des Behälters sein. Dadurch ist es möglich, den Verschluss bzw. die Mündung des Behälters von oben bzw. am Rand möglichst vollständig in einem Kamerabild zu erfassen.

Darüber hinaus stellt die Erfindung mit dem Anspruch 11 eine Inspektionsvorrichtung zur Verschlusskontrolle von Behältern bereit. Vorteilhafte Weiterbildungen der Erfindung sind in den Unteransprüchen genannt.

Dadurch, dass die Inspektionsvorrichtung den optischen 3D-Messsensor umfasst, können der Behälter mit seinem Verschluss dreidimensional erfasst und hochauflösende 3D-Daten gewonnen werden. Die Auswertung der 3D-Daten kann dann gemäß dem zuvor beschriebenen Inspektionsverfahren durchgeführt werden, so dass unabhängig vom Behälter- bzw. Verschlusstyp die gleiche Inspektionsvorrichtung eingesetzt werden kann. Folglich muss lediglich die Auswertung der generierten 3D-Daten durch eine geeignete Parametrisierung angepasst werden. Darüber hinaus sind die 3D-Daten des optischen 3D-Messsensors besonders genau, wodurch beispielsweise die Verformung des Verschlusses sowie dessen Position gegenüber dem Behälter in die Verschlusskontrolle mit einbezogen werden können. Folglich ist eine zuverlässige Verschlusskontrolle von verschiedenartigsten Behälter- bzw. Verschlusstypen mit einer besonders einfach aufgebauten Inspektionshardware möglich.

Die Inspektionsvorrichtung kann in einer Getränkeverarbeitungsanlage angeordnet sein. Die Inspektionsvorrichtung kann einem Füller und einem Verschließer für die verschlossenen Behälter nachgeordnet sein.

Die Transporteinrichtung kann ein Karussell oder eine lineare Fördereinrichtung umfassen. Darüber hinaus kann die Transporteinrichtung Behälteraufnahmen für die verschlossenen Behälter umfassen. Denkbar ist, dass die Behälteraufnahmen dazu ausgebildet sind, den Behälter gegenüber dem 3D-Messsensor um seine Längsachse zu drehen und/oder diese zu verkippen. Denkbar ist also, dass die Behälteraufnahmen dazu ausgebildet sind, die Behälter um eine oder mehrere Achsen zu schwenken. Dadurch kann der Behälter bzw. der Verschluss mit dem optischen 3D-Messsensor aus mehreren Perspektiven erfasst werden.

Der optische 3D-Messsensor kann für ein stereoskopisches 3D-Messverfahren ausgebildet sein und dafür eine Kamera mit einem stereoskopischen Objektiv oder zwei oder mehrere Kameras mit jeweils einem Objektiv umfassen und weiterhin vorzugsweise mit einer diffusen oder strukturierten Lichtquelle ausgebildet sein. Dadurch, dass der optische 3D-Messsensor für das stereoskopische 3D-Messverfahren ausgebildet ist, kann der Behälter mit seinem Verschluss berührungsfrei und besonders genau mit hoher Auflösung erfasst und daraus 3D-Daten generiert werden. Beispielsweise werden die 3D-Daten durch Triangulation der Bilddaten berechnet. Die eine Kamera mit dem stereoskopischen Objektiv oder die zwei oder mehreren Kameras können dabei Kamerabilder aus wenigstens zwei verschiedenen Bildperspektiven erfassen. Mit zwei unterschiedlichen Bildperspektiven sind hier wenigstens zwei schräg zueinander verlaufende Blickrichtungen der Kameras gemeint.

Der optische 3D-Messsensor kann für ein Lichtschnitt-3D-Messverfahren ausgebildet sein und dafür wenigstens eine Kamera mit einem Objektiv und eine strukturierte Lichtquelle umfassen. Dadurch ist zur Erfassung der 3D-Daten lediglich eine Kamera notwendig, und der apparative Aufwand des optischen 3D-Messsensors ist besonders gering. Die strukturierte Lichtquelle kann einen Projektor zur Projektion eines Musters umfassen, der vorzugsweise dazu ausgebildet ist, unterschiedliche Muster zu projizieren, beispielsweise mittels eines bewegbaren Gitters, eines LCDs, eines LCoS, eines DMDs oder dergleichen. Ebenso kann die strukturierte Lichtquelle einen Laser sowie eine vorgeschaltete Optik zur Erzeugung einer Linie umfassen. Die Optik kann beispielsweise ein diffraktives Gitter sein. Ebenso ist denkbar, dass mit dem Laser ein Gitter oder ein Muster von Punkten projiziert wird.

Das bzw. die Objektive der Kamera können perizentrisch ausgebildet sein. Dadurch kann der Verschluss bzw. die Behältermündung um die Behälterlängsachse herum mit einem Kamerabild erfasst werden.

Darüber hinaus kann die Inspektionsvorrichtung ein oder mehrere der zuvor in Bezug auf das Inspektionsverfahren beschriebenen Merkmale in beliebigen Kombinationen umfassen.

Weitere Merkmale und Vorteile der Erfindung werden nachfolgend anhand der in den Figuren dargestellten Ausführungsbeispiele beschrieben. Dabei zeigt:
- Fig. 1: ein Ausführungsbeispiel des Inspektionsverfahrens zur Verschlusskontrolle von Behältern als Flussdiagramm;
- Fig. 2: ein Ausführungsbeispiel einer Inspektionsvorrichtung zur Durchführung des in der Fig. 1 dargestellten Inspektionsverfahrens; und
- Fig. 3: ein Ausführungsbeispiel des in der Fig. 2 dargestellten optischen 3D-Messsensors.

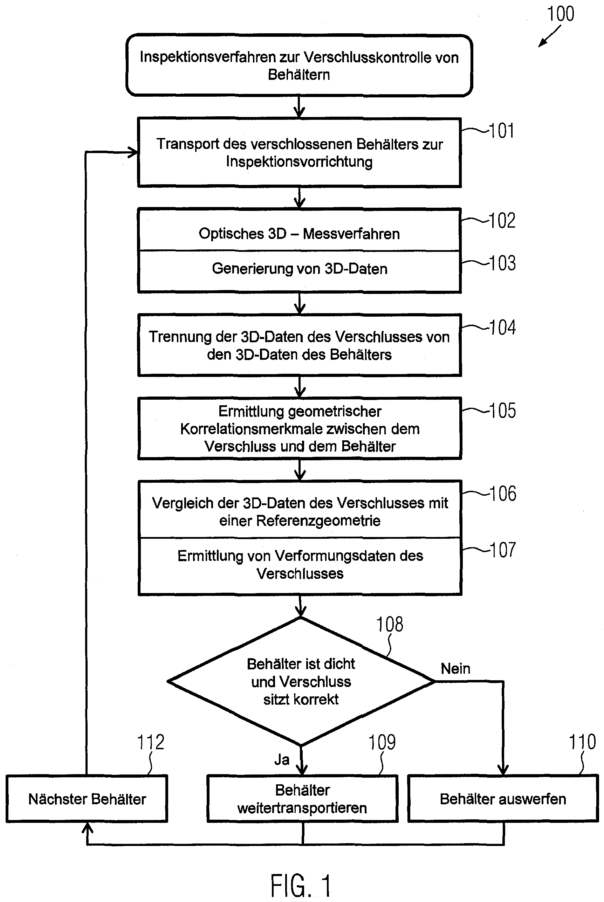

In der Fig. 1 ist ein Ausführungsbeispiel des Inspektionsverfahrens 100 zur Verschlusskontrolle von Behältern in einem Flussdiagramm dargestellt. Zu sehen sind die einzelnen nachfolgend beschriebenen Verfahrensschritte 101 - 112:
Zunächst wird im Schritt 101 ein verschlossener Behälter zur Inspektionsvorrichtung transportiert und mit den nachfolgenden Verfahrensschritten 102 - 112 hinsichtlich Dichtigkeit und/oder korrekten Sitz des Verschlusses inspiziert. Während der Inspektion ist denkbar, dass die verschlosseneen Behälter jeweils an einer gegenüber einem optischen 3D-Messsensor feststehenden Inspektionsposition angehalten oder kontinuierlich weitertransportiert werden.

Im darauffolgenden Schritt 102 wird der Behälter zusammen mit seinem Verschluss wenigstens teilweise mittels eines optischen 3D-Messverfahrens erfasst. Bei dem optischen 3D-Messverfahren kann es sich beispielsweise um ein stereoskopisches 3D-Messverfahren handeln, bei dem der Behälter zusammen mit seinem Verschluss wenigstens teilweise aus zwei unterschiedlichen Bildperspektiven erfasst wird. Aus den Kamerabildern der zwei unterschiedlichen BildPerspektiven können dann 3D-Daten mittels Triangulationen gewonnen werden. Denkbar ist, dass bei dem stereoskopischen 3D-Messverfahren der Behälter zusammen mit seinem Verschluss wenigstens teilweise von einer diffusen oder strukturierten Lichtquelle beleuchtet wird. Dadurch gelingt eine besonders hohe Messdynamik hinsichtlich der Oberfläche des Behälters und des Verschlusses bzw. eine einfachere Korrelation derselben Objektpunkte in den beiden Bildperspektiven. Alternativ ist auch denkbar, dass der Behälter zusammen mit seinem Verschluss wenigstens teilweise mittels eines Lichtschnitt-3D-Messverfahrens erfasst werden, wobei diese aus einer ersten Richtung mittels einer strukturierten Lichtquelle beleuchtet und aus seiner dazu schrägen zweiten Richtung mit einer Kamera erfasst werden. Denkbar ist, dass die strukturierte Lichtquelle mittels eines Lasers oder eines Projektors zur Projektion eines Lichtmusters ausgebildet ist. Dabei wird die Perspektive der Lichtquelle mit der Bildperspektive der Kamera verschnitten und entsprechende 3D-Daten trianguliert. Die Auflösung der 3D-Daten ist kleiner als 0,5 mm, kann jedoch auch noch kleiner bis hin zu 0,1 mm oder noch kleiner sein.

Nach der Durchführung des optischen 3D-Messverfahrens werden dann im Schritt 103 3D-Daten generiert, vorzugsweise 3D-Punkte, 3D-Linienelemente und/oder 3D-Flächenelemente (Dreiecke oder Vierecke). Diese werden dann in einem geeigneten Datenformat gespeichert, beispielsweise in einem elektronischen Speicher bzw. in einer Datenbank.

Anschließend werden im Schritt 104 die 3D-Daten des Verschlusses und die 3D-Daten des Behälters identifiziert und getrennt. Die Identifizierung des Verschlusses bzw. des Behälters kann über eine automatische Maskierung der 3D-Daten oder der Bilddaten erfolgen, da ja der verwendete Verschlusstyp bzw. Behältertyp bekannt ist. Denkbar ist, dass zunächst ein Referenzbehälter bzw. Referenzverschluss eingemessen wird und die 3D-Daten manuell zugeordnet werden. Anschließend können dann über die Zuordnung die 3D-Daten der nachfolgend inspizierten Behälter von ihren Verschlüssen getrennt werden.

Dadurch, dass die 3D-Daten des Verschlusses von den 3D-Daten des Behälters getrennt sind, können im nachfolgenden Schritt 105 geometrische Korrelationsmerkmale zwischen dem Verschluss und dem Behälter ermittelt werden. Beispielsweise wird aus den 3D-Daten des Verschlusses dessen Mittelpunkt oder ein anderweitig geeigneter Bezugspunkt ermittelt. Gleiches wird für den Behälter durchgeführt. Aus dem Abstand zwischen dem Verschluss und dem Behälter kann dann der korrekte Sitz des Verschlusses berechnet werden. Im Detail kann dabei die Höhe und die Exzentrizität des Verschlusses gegenüber dem Behälter berechnet werden. Fällt die Höhe bzw. die Exzentrizität aus einem Toleranzbereich heraus, so kann daraus auf einen nicht korrekten Sitz des Verschlusses geschlossen werden.

In dem weiteren Schritt 106 werden dann die 3D-Daten des Verschlusses mit einer Referenzgeometrie verglichen. Die Referenzgeometrie kann ein CAD-Datensatz mit Konstruktionsdaten des Verschlusses sein. Nachfolgend wird im Schritt 107 die Stirnfläche des Verschlusses isoliert und deren Wölbung gegenüber dem CAD-Datensatz bestimmt, beispielsweise eine Krümmung. Ist die Krümmung zu niedrig, so kann daraus auf eine zu geringe Wölbung des Verschlusses und damit auf einen zu geringen Innendruck im Behälter geschlossen werden. Folglich kann über den Vergleich der 3D-Daten des Verschlusses mit der Referenzgeometrie ermittelt werden, ob der Verschluss dicht auf dem Behälter sitzt.

Im Schritt 108 wird dann auf Basis der vorangegangenen Ergebnisse entschieden, ob der Behälter dicht ist und der Verschluss korrekt sitzt. Ist dies zu bejahen, so wird der Behälter im Schritt 109 weiteren Verarbeitungsschritten, beispielsweise einer Verpackungsmaschine, zugeführt. Wird dies verneint, so wird der Behälter im Schritt 110 von der weiteren Verarbeitung ausgeschlossen und ausgeworfen. Er kann dann beispielsweise recycelt oder gereinigt werden.

Im Schritt 112 wird der nächste Behälter ausgewählt und die Schritte 101-110, wie voranstehend beschrieben, für diesen Behälter durchgeführt.

Dadurch, dass bei dem zuvor beschriebenen Inspektionsverfahren ein optisches 3D-Messverfahren 102 - 103 eingesetzt wird, mit dem der Behälter zusammen mit seinem Verschluss wenigstens teilweise erfasst wird, werden zunächst berührungsfrei besonders hochauflösende 3D-Daten erzeugt. Dadurch können die nachfolgenden Verfahrensschritte 104-107 jeweils auf den verwendeten Behälter- bzw. Verschlusstyp abgestimmt bzw. parametrisiert werden, so dass das Inspektionsverfahren 100 insgesamt besonders flexibel und zuverlässig für verschieden Verschluss- und Behältertypen einsetzbar ist. Die Inspektion erfolgt also vorwiegend virtuell im Rechner und ist damit besonders einfach anpassbar, ohne Hardwarekomponenten auszutauschen.

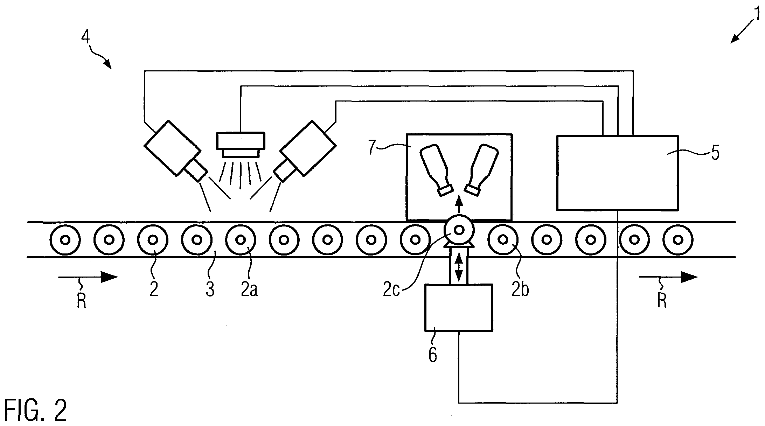

In der Fig. 2 ist ein Ausführungsbeispiel einer Inspektionsvorrichtung 1 zur Durchführung des Inspektionsverfahrens 100 aus der Fig. 1 dargestellt. Zu sehen ist, dass die Behälter 2 mit der Transporteinrichtung 3 zum optischen 3D-Messsensor 4 in der Förderrichtung R transportiert werden. Die Transporteinrichtung 3 ist hier beispielsweise ein Förderband, es ist jedoch auch jede andere geeignete Transporteinrichtung denkbar, wie ein Karussell. Darüber hinaus werden die Behälter 2 kontinuierlich entlang der Förderrichtung R transportiert, so dass ein besonders hoher Maschinendurchsatz möglich ist. Alternativ ist auch denkbar, dass die Behälter 2 jeweils an einer Inspektionsposition anhalten.

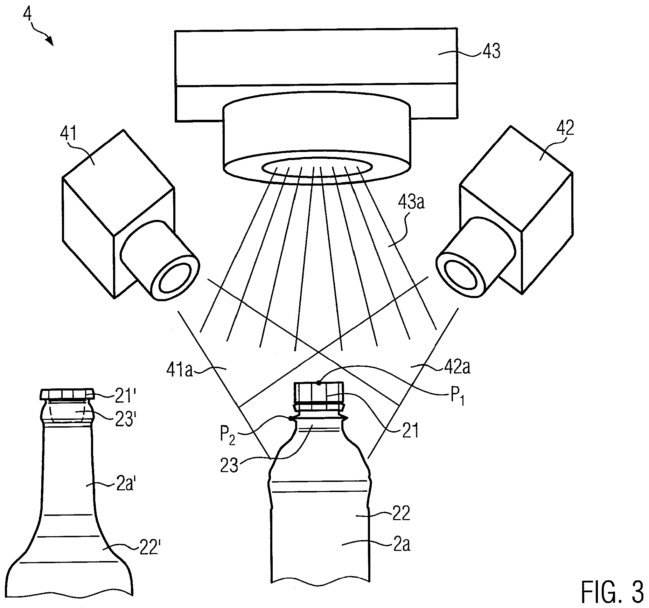

Weiter ist zu sehen, dass der Behälter 2a gerade zusammen mit seinem Verschluss von dem optischen 3D-Messsensor 4 aus einer Perspektive schräg oben erfasst wird. Der optische 3D-Messsensor 4 sowie das dabei verwendete optische 3D-Messverfahren werden weiter unten anhand der Fig. 3 genauer beschrieben.

Die erfassten Bilddaten des 3D-Messsensors 4 werden durch die damit verbundene Auswerteeinrichtung 5 ausgewertet und daraus 3D-Daten des Behälters 2a bzw. dessen Verschlusses generiert. Dazu ist die Auswerteeinrichtung 5 mit einem Mikroprozessor (CPU), einem Speicher sowie den notwendigen Datenschnittstellen ausgebildet. Anders ausgedrückt handelt es sich bei der Auswerteeinrichtung 5 um eine Bildverarbeitungseinheit, mit der die von dem 3D-Messsensor 4 erfassten Bilder ausgewertet werden. Des Weiteren werden mit der Auswerteeinrichtung 5 die Lichtquelle des 3D-Messsensors 4 gesteuert und die zuvor in Bezug auf die Fig. 1 beschriebenen Verfahrensschritte 102-108 durchgeführt.

Wird nun auf Basis der Verfahrensschritte 102-108 entschieden, dass beispielsweise der hier dargestellte Behälter 2c undicht und/oder der Verschluss nicht korrekt sitzt, so wird er automatisch mittels der Ausschleuseinrichtung 6 von der Transporteinrichtung 3 zum Recyceln in den Container 7 ausgeworfen. Demgegenüber wurde mit der Inspektionsvorrichtung 1 bzw. dem Inspektionsverfahren 100 bei dem hier dargestellten Behälter 2b festgestellt, dass der Verschluss dicht und korrekt sitzt. Folglich wird der Behälter 2b mit der Transportrichtung 3 in Förderrichtung R weitertransportiert, beispielsweise zu einer hier nicht dargestellten Verpackungsstation.

In der Fig. 3 ist ein Ausführungsbeispiel des optischen 3D-Messsensors 4 der Inspektionsvorrichtung 1 aus der Fig. 2 im Detail dargestellt. Zu sehen sind die beiden Kameras 41 und 42, die aus zwei unterschiedlichen Bildperspektiven 41a, 42a den Behälterhals 23 und den Verschluss 21 des Behälters 2a erfassen. Darüber hinaus ist denkbar, dass mit einem geeigneten Messfeld der Behälterkörper 22 zusätzlich erfasst wird. In dem in Fig. 3 dargestellten Ausführungsbeispiel ist der Behälter 2a eine PET-Kunststoffflasche mit einem Schraubverschluss 21. Allerdings ist mit dem 3D-Messsensor 4 genauso eine links in der Fig. 3 dargestellte Glasflasche 2a' mit einem Kronkorken 21' erfassbar, so dass auch hier zuverlässig eine Verschlusskontrolle durchgeführt werden kann.

Des Weiteren umfasst der 3D-Messsensor 4 die diffuse Lichtquelle 43, durch die der Behälter 2a besonders gleichmäßig beleuchtet wird, um unabhängig von der Beschaffenheit der Oberfläche genau zu messen.

Anhand der Beispielpunkte P₁ und P₂ wird das optische 3D-Messverfahren genauer beschrieben: Bei der Inspektion werden von den beiden Kameras 41 und 42 die Punkte P1 und P2 aus den unterschiedlichen Bildperspektiven 41a und 42a aufgenommen. Durch die unterschiedlichen Bildperspektiven liegt der Punkt P1 in den beiden Kamerabildern an unterschiedlichen Bildpixeln. Durch eine Kalibrierung der Kameras 41 und 42 kann dann auf die genaue Lage des Punktes P₁ geschlossen und dessen zugehörige Koordinate im Raum als 3D-Punkt berechnet werden. Gleiches erfolgt auch für den Punkt P₂. Es handelt sich hier also um ein stereoskopisches 3D-Messverfahren.

Ebenso ist denkbar, dass anstelle der beiden Kameras 41 und 42 nur eine Kamera mit einem stereoskopischen Objektiv eingesetzt wird, das die beiden unterschiedlichen Bildperspektiven 41a und 42a auf einem einzigen Bildsensor abbildet. Ebenso ist denkbar, dass zusätzliche Kameras für eine höhere Messgenauigkeit oder eine automatische Kalibrierung eingesetzt werden.

Alternativ ist auch denkbar, dass anstelle der diffusen Lichtquelle 43 eine strukturierte Lichtquelle eingesetzt wird. Durch die strukturierte Lichtquelle können die Objektpunkte, also beispielsweise die Punkte P₁ und P₂, einfacher in den Kamerabildern der Kameras 41 und 42 identifiziert werden.

Weiterhin ist alternativ denkbar, dass der 3D-Messsensor 4 nicht für ein stereoskopisches sondern für ein Lichtschnitt-3D-Messverfahren ausgebildet ist. Dabei wird der Behälter 2a bzw. der Verschluss 21 wenigstens teilweise mit einer strukturierten Lichtquelle beleuchtet und lediglich mit einer einzelnen Kamera aus einer Bildperspektive erfasst. Hier dient die strukturierte Lichtquelle quasi als inverse Kamera oder als Lichtebene (Laser zur Projektion einer Laserlinie). Insgesamt werden also durch das zuvor beschriebene Inspektionsverfahren 100 bzw. durch die Inspektionsvorrichtung 1 in den Fig. 1-3 besonders hochauflösende 3D-Daten des Behälters 2a erfasst. Dadurch kann die eigentliche Verschlusskontrolle vorwiegend virtuell auf Basis der erfassten 3D-Daten erfolgen und ist so besonders einfach mittels einer Anpassung des Auswerteverfahrens auf verschiedene Behälter- bzw. Verschlusstypen anpassbar. Daher ist ohne hohen apparativen Aufwand auch bei geringen Platzverhältnissen eine zuverlässige Verschlusskontrolle möglich.

Es versteht sich, dass in den zuvor beschriebenen Ausführungsbeispielen genannte Merkmale nicht auf diese speziellen Kombinationen beschränkt sind, sondern in beliebigen anderen Kombinationen möglich sind. Der Schutzbereich ist dabei durch die anliegenden Ansprüche definiert.

## Patentansprüche

1. Inspektionsverfahren (100) zur Verschlusskontrolle von Behältern, insbesondere Flaschen, wobei die verschlossenen Behälter mit einer Transporteinrichtung transportiert (101) und von einer Inspektionsvorrichtung hinsichtlich Dichtigkeit und/oder korrekten Sitz von auf den Behältern aufgebrachten Verschlüssen inspiziert werden (102 - 108),
wobei die Inspektionsvorrichtung mit einem optischen 3D-Messverfahren jeweils einen Behälter zusammen mit seinem Verschluss wenigstens teilweise erfasst (102) und davon 3D-Daten generiert (103), insbesondere 3D-Punkte, 3D-Linienelemente und/oder 3D-Flächenelemente,
**dadurch gekennzeichnet, dass**
bei der Verarbeitung durch die Auswerteeinrichtung die 3D-Daten des Verschlusses und die 3D-Daten des Behälters voneinander getrennt werden (104), und
dass die 3D-Daten mit einer Auswerteeinrichtung verarbeitet werden (104 - 107) und damit auf die Dichtigkeit und/oder den korrekten Sitz des Verschlusses geschlossen wird (108).

2. Inspektionsverfahren (100) nach Anspruch 1, wobei bei der Verarbeitung der 3D-Daten geometrische Korrelationsmerkmale zwischen dem Verschluss und dem Behälter ermittelt werden (105).

3. Inspektionsverfahren (100) nach einem der Ansprüche 1 - 2, wobei bei der Verarbeitung der 3D-Daten eine Position, eine Höhe, ein Schiefsitz und/oder eine Exzentrizität des Verschlusses gegenüber dem Behälter und/oder eine Wölbung des Verschlusses ermittelt werden.

4. Inspektionsverfahren (100) nach einem der Ansprüche 1 - 3, wobei bei der Verarbeitung die 3D-Daten wenigstens teilweise mit einer Referenzgeometrie verglichen werden und daraus insbesondere Verformungsdaten des Verschlusses ermittelt werden (106).

5. Inspektionsverfahren (100) nach einem der Ansprüche 1 - 4, wobei das 3D-Messverfahren (102) ein stereoskopisches 3D-Messverfahren umfasst, bei dem der Behälter zusammen mit seinem Verschluss wenigstens teilweise aus zwei Bildperspektiven erfasst wird.

6. Inspektionsverfahren (100) nach Anspruch 5, wobei beim stereoskopischen 3D-Messverfahren (102) der Behälter zusammen mit seinem Verschluss wenigstens teilweise von einer diffusen Lichtquelle beleuchtet wird.

7. Inspektionsverfahren (100) nach Anspruch 5, wobei beim stereoskopischen 3D-Messverfahren (102) der Behälter zusammen mit seinem Verschluss wenigstens teilweise von einer strukturierten Lichtquelle zur Korrelation derselben Objektpunkte in den zwei Bildperspektiven beleuchtet wird.

8. Inspektionsverfahren (100) nach einem der Ansprüche 1 - 4, wobei das 3D-Messverfahren (102) ein Lichtschnitt-3D-Messverfahren umfasst, bei dem der Behälter zusammen mit seinem Verschluss wenigstens teilweise aus einer ersten Richtung mittels einer strukturierten Lichtquelle beleuchtet und aus einer dazu schrägen zweiten Richtung mit einer Kamera erfasst wird.

9. Inspektionsverfahren (100) nach einem der Ansprüche 1 - 8, wobei das 3D-Messverfahren (102) den Behälter zusammen mit seinem Verschluss wenigstens teilweise mit einer Auflösung von kleiner 0,5 mm, bevorzugt kleiner 0,2 mm oder weiterhin bevorzugt kleiner 0,1 mm dreidimensional erfasst.

10. Inspektionsverfahren (100) nach einem der Ansprüche 1 - 9, wobei der Verschluss und/oder eine Mündung des Behälters wenigstens teilweise von einem perizentrischen Objektiv erfasst werden.

11. Inspektionsvorrichtung (1) zur Verschlusskontrolle von Behältern (2), insbesondere Flaschen, mit einer Transporteinrichtung (3) zum Transport der verschlossenen Behälter (2),
wobei die Inspektionsvorrichtung (1) einen optischen 3D-Messsensor (4) zur wenigstens teilweisen dreidimensionalen Erfassung eines Behälters (2) mit seinem Verschluss (21) sowie eine Auswerteeinrichtung (5) umfasst,
**dadurch gekennzeichnet, dass**
die Inspektionsvorrichtung (1) zur Durchführung des Inspektionsverfahrens (100) nach einem der Ansprüche 1 - 10 ausgebildet ist.

12. Inspektionseinheit nach Anspruch 11, wobei der optische 3D-Messsensor (4) für ein stereoskopisches 3D-Messverfahren (102) ausgebildet ist und dafür eine Kamera (41) mit einem stereoskopischen Objektiv oder zwei oder mehrere Kameras (41, 42) mit jeweils einem Objektiv umfasst und weiterhin vorzugsweise mit einer diffusen oder strukturierten Lichtquelle (43) ausgebildet ist.

13. Inspektionseinheit nach Anspruch 11, wobei der optische 3D-Messsensor (4) für ein Lichtschnitt-3D-Messverfahren ausgebildet ist und dafür wenigstens eine Kamera (41) mit einem Objektiv und eine strukturierte Lichtquelle (43) umfasst.

14. Inspektionseinheit nach Anspruch 12 oder 13, wobei das bzw. die Objektive perizentrisch ausgebildet sind.

## Claims

1. Inspection method (100) for closure control of containers, in particular bottles, where the closed containers are transported (101) by a transport apparatus and inspected (102 - 108) by an inspection device in terms of tightness and/or correct seating of closures applied to the containers,
wherein the inspection device at least in part captures (102) a respective container together with its closure in an optical 3D measuring method and generates (103) 3D data therefrom, in particular 3D points, 3D line elements and/or 3D area elements,
**characterised in that**
the 3D data of the closure and the 3D data of the container are separated (104) from one another when processed by the evaluation device, and
that the 3D data is processed (104 - 107) with an evaluation device and a conclusion about the tightness and/or the correct seating of the closure is drawn (108) therefrom.

2. Inspection method (100) according to claim 1, where geometric correlation features between the closure and the container are determined (105) when processing the 3D data.

3. Inspection method (100) according to one of the claims 1-2, where a position, a height, a crooked seat and/or an eccentricity of the closure relative to the container and/or a curvature of the closure are determined when processing the 3D data.

4. Inspection method (100) according to one of the claims 1-3, where the 3D data is at least in part compared with a reference geometry during processing and, in particular, deformation data of the closure is determined (106) therefrom.

5. Inspection method (100) according to one of the claims 1-4, where the 3D measuring method (102) comprises a stereoscopic 3D measuring method in which the container together with its closure is captured at least in part from two image perspectives.

6. Inspection method (100) according to claim 5, where the container together with its closure is at least in part illuminated by a diffused light source in the stereoscopic 3D measuring method (102).

7. Inspection method (100) according to claim 5, where the container together with its closure is at least in part illuminated by a structured light source in the stereoscopic 3D measuring method (102) for correlation of the same object points in the two image perspectives.

8. Inspection method (100) according to one of the claims 1-4, where the 3D measuring method (102) comprises a light-section 3D measuring method in which the container is illuminated together with its closure at least in part from a first direction by way of a structured light source and is captured by a camera from a second direction that is angled thereto.

9. Inspection method (100) according to one of the claims 1-8, where the 3D measuring method (102) captures the container together with its closure three-dimensionally at least in part with a resolution of lower than 0.5 mm, preferably lower than 0.2 mm, or more preferably lower than 0.1 mm.

10. Inspection method (100) according to one of the claims 1-9, where the closure and/or a mouth of the container are captured at least in part by a pericentric objective lens.

11. Inspection device (1) for closure control of containers (2), in particular bottles, with a transport apparatus (3) for transporting the closed containers (2),
wherein the inspection device (1) comprises an optical 3D measuring sensor (4) for at least in part capturing a container (2) with its closure (21) three-dimensionally and an evaluation device (5),
**characterised in that**
the inspection device (1) is configured for performing the inspection method (100) according to one of the claims 1 - 10.

12. Inspection unit according to claim 11, where the optical 3D measuring sensor (4) is configured for a stereoscopic 3D measuring method (102) and for this purpose comprises a camera (41) with a stereoscopic objective lens or two or more cameras (41, 41) each with an objective lens, and furthermore preferably is equipped with a diffused or structured light source (43).

13. Inspection unit according to claim 11, where the optical 3D measuring sensor (4) is configured for a light-section 3D measuring method and for this purpose comprises at least one camera (41) with an objective lens and a structured light source (43).

14. Inspection unit according to claim 12 or 13, where the objective lens or the objective lenses are configured to be pericentric.

## Revendications

1. Procédé d'inspection (100) pour vérifier la fermeture de récipients, en particulier de bouteilles, dans lequel les récipients fermés sont transportés par un dispositif de transport (101) et inspectés par un dispositif d'inspection concernant l'étanchéité et/ou le bon ajustement de fermetures appliquées aux récipients (102 - 108),
dans lequel le dispositif d'inspection détecte au moins partiellement (102) un récipient ainsi que sa fermeture à l'aide d'un procédé de mesure 3D optique et génère ainsi des données 3D (103), en particulier des points 3D, des éléments de ligne 3D et/ou des éléments de surface 3D,
**caractérisé en ce que**
lors du traitement par le dispositif d'évaluation, les données 3D de la fermeture et les données 3D du récipient sont séparées les unes des autres (104), et
les données 3D sont traitées avec un dispositif d'évaluation (104 - 107) et la fermeture (108) est ainsi fermée en assurant l'étanchéité et/ou l'ajustement correct.

2. Procédé d'inspection (100) selon la revendication 1, dans lequel, lors du traitement des données 3D, des caractéristiques de corrélation géométrique entre la fermeture et le récipient sont déterminées (105).

3. Procédé d'inspection (100) selon l'une des revendications 1 et 2, dans lequel, lors du traitement des données 3D, une position, une hauteur, un ajustement oblique et/ou une excentricité de la fermeture par rapport au récipient et/ou à une courbure de la fermeture sont déterminés.

4. Procédé d'inspection (100) selon l'une des revendications 1 à 3, dans lequel, lors du traitement, les données 3D sont comparées au moins partiellement à une géométrie de référence et, en particulier, des données de déformation de la fermeture sont déterminées à partir de celles-ci (106).

5. Procédé d'inspection (100) selon l'une des revendications 1 à 4, dans lequel le procédé de mesure 3D (102) comprend un procédé de mesure 3D stéréoscopique dans lequel le récipient ainsi que sa fermeture sont détectés au moins partiellement à partir de deux perspectives d'image.

6. Procédé d'inspection (100) selon la revendication 5, dans lequel, dans le procédé de mesure 3D stéréoscopique (102), le récipient ainsi que sa fermeture sont éclairés au moins partiellement par une source de lumière diffuse.

7. Procédé d'inspection (100) selon la revendication 5, dans lequel, dans le procédé de mesure 3D stéréoscopique (102), le récipient ainsi que sa fermeture sont au moins partiellement éclairés par une source de lumière structurée pour corréler les mêmes points d'objet dans les deux perspectives d'image.

8. Procédé d'inspection (100) selon l'une des revendications 1 à 4, dans lequel le procédé de mesure 3D (102) comprend un procédé de mesure 3D de section lumineuse, dans lequel le récipient ainsi que sa fermeture sont éclairés au moins partiellement depuis une première direction au moyen d'une source de lumière structurée et détectés à l'aide d'une caméra depuis une deuxième direction oblique par rapport à la première direction.

9. Procédé d'inspection (100) selon l'une des revendications 1 à 8, dans lequel le procédé de mesure 3D (102) détecte au moins partiellement en trois dimensions le récipient ainsi que sa fermeture avec une résolution inférieure à 0,5 mm, de préférence inférieure à 0,2 mm, et de préférence encore inférieure à 0,1 mm.

10. Procédé d'inspection (100) selon l'une des revendications 1 à 9, dans lequel la fermeture et/ou une embouchure du récipient est détectée au moins partiellement à l'aide d'un objectif péricentrique.

11. Dispositif d'inspection (1) pour vérifier la fermeture de récipients (2), en particulier de bouteilles, avec un dispositif de transport (3) pour transporter les récipients fermés (2),
dans lequel le dispositif d'inspection (1) comprend un capteur de mesure 3D optique (4) pour la détection tridimensionnelle au moins partielle d'un récipient (2) avec sa fermeture (21) ainsi qu'un dispositif d'évaluation (5),
**caractérisé en ce que**
le dispositif d'inspection (1) est constitué pour mettre en œuvre le procédé d'inspection (100) selon l'une des revendications 1 à 10.

12. Unité d'inspection selon la revendication 11, dans laquelle le capteur de mesure 3D optique (4) est constitué pour un procédé de mesure 3D stéréoscopique (102) et comprend à cet effet une caméra (41) avec un objectif stéréoscopique ou deux ou plusieurs caméras (41, 42) dotées chacune d'un objectif, et est en outre constitué de préférence avec une source de lumière diffuse ou structurée (43).

13. Unité d'inspection selon la revendication 11, dans laquelle le capteur de mesure 3D optique (4) est constitué pour un procédé de mesure 3D de sections lumineuses, et comprend à cet effet au moins une caméra (41) avec un objectif et une source de lumière structurée (43).

14. Unité d'inspection selon la revendication 12 ou 13, dans laquelle le ou les objectifs sont constitués pour être péricentriques.
